# EUROPEAN PATENT SPECIFICATION

(11) **EP 4 005 729 B1**
(45) Date of publication and mention of the grant of the patent: **03.09.2025**
(21) Application number: 20842959.7
(22) Date of filing: 02.07.2020
(51) Int. Cl.: B23Q 7/00, B23Q 41/02, B65G 35/06, B23Q 7/03, B65G 17/00, B65G 19/02

(54) **PALLET TRANSPORT DEVICE AND PALLET TRANSPORT RESTING METHOD**
PALETTENTRANSPORTVORRICHTUNG UND -RUHEVERFAHREN
DISPOSITIF DE TRANSPORT DE PALETTE ET PROCÉDÉ D'APPUI DE TRANSPORT DE PALETTE

(30) Priority: 22.07.2019 JP 2019134313
(43) Date of publication of application: 01.06.2022
(73) Proprietor: NITTOKU Co., Ltd., Saitama-city, Saitama 3300841 (JP)
(72) Inventor: SUGIMOTO, Shinji, Fukushima-shi, Fukushima 960-1393 (JP); ONODA, Masaya, Saitama-city, Saitama 330-0841 (JP)
(74) Representative: Grünecker Patent- und Rechtsanwälte PartG mbB
(86) International application number: PCT/JP2020/026067
(87) International publication number: WO 2021/014924

(56) References cited:
- EP-A1- 3 489 151
- WO-A1-2017/015685
- JP-A- 2000 198 526
- JP-A- 2016 117 117
- JP-A- 2016 117 117
- JP-A- 2017 064 873
- JP-A- 2018 144 113
- JP-A- 2018 144 113
- JP-A- H03 136 740
- JP-A- S60 113 765

## Description

### TECHNICAL FIELD

The present invention relates to a pallet conveying device and a conveyed-pallet retaining method.

### BACKGROUND ART

Conventionally, a pallet conveying device in which, in a production line, a pallet for loading a work is mounted on a pallet rail and the pallet is conveyed to each of processing stations by circulating an endless belt to which the pallet is anchored has been proposed (see JP2011-93032A).

In the above-described pallet conveying device, a so-called synchronous belt on which protrusions and recesses extending in the width direction are provided alternately in the longitudinal direction in a consecutive manner is used as the endless belt. The pallet is formed with protrusions and recesses that can engage with the protrusions and recesses of the endless belt, and the protrusions and recesses of the pallet are engaged with the protrusions and recesses of the endless belt in a state in which the pallet is mounted on a pallet rail.

In the above-described pallet conveying device, the pallet is conveyed by circulating the endless belt to which the pallet is anchored. When circulation of the endless belt is stopped, the conveyance of the pallet is also stopped. Therefore, for example, by stopping the circulation of the endless belt in a state in which the pallet faces the processing station, the work loaded on the pallet can be subjected to processing at the respective processing stations.

In the above-described pallet conveying device, the synchronous belt is used as the endless belt. Because the endless belt needs to be circulated along the pallet rail, the endless belt has a flexibility. Thus, even if the protrusions and recesses of the pallet are engaged with the protrusions and recesses of the endless belt, gaps required for the circulation are formed therebetween. Therefore, in the above-described pallet conveying device, even if the position of the endless belt in the circulation can be controlled accurately, the position of the pallet anchored to the endless belt will be deviated by an amount corresponding to the gaps.

If such a deviation is caused between the endless belt and the pallet, it becomes difficult to cause the pallet to face the processing station accurately even if the circulation of the endless belt is accurately controlled. Thus, the conventional pallet conveying device is provided with a pallet-movement locking mechanism for allowing the pallet to face the processing station accurately. The general pallet-movement locking mechanism includes those provided with an anchoring hole formed in each pallet so as to face each of the processing stations and a fixing cylinder provided on each of the processing stations.

The fixing cylinder is a fluid pressure cylinder that is configured such that a pin inserted into the anchoring hole can be moved in and out. The pin is inserted into the anchoring hole by extending the fixing cylinder, and thereby, the pallet is allowed to face the processing station accurately and the movement of the pallet is prohibited in this state. By pulling out the pin from the anchoring hole by contracting the fixing cylinder, it becomes possible to move the pallet subsequently. JP H03-136740 A discloses a device according to the preamble of claim 1 and proposes to accurately position a workpiece in various areas of a conveying track by installing a belt-like driving member on two vertical directional guide lanes of a conveying direction and forming a crossing directional guide lane of a propelling device. A table plate is fixed on a housing part, a traveling member is supported on a height guideway through a guide roller, a side guideway is formed of a side guide surface of two reversing rollers, and a guide passage is formed together with the side guide surface of the traveling member. Since a rack is inserted into this area, a driving member meshes with the tooth part to constitute a feed device so as to perform feeding operation of the traveling member.

### SUMMARY OF INVENTION

However, in the pallet-movement locking mechanism using the fluid pressure cylinder, in order to allow the pallet to face the processing station, the fluid pressure cylinder is extended to insert the pin into the anchoring hole after the circulation of the endless belt is stopped. In addition, the pallet that has been subjected to the processing needs to be moved after pulling the pin out from an anchoring hole by contracting the fluid pressure cylinder.

Thus, the time required for the extension or the contraction of the fluid pressure cylinder and the confirmation time required for a sensor to detect completion of the extension or the contraction are required in addition to the time required to convey the pallet, and therefore, it is conceivable that the time required for the conveyance of the pallet is increased.

In addition, in a case in which the pallet is stopped multiple times at narrow pitches, it is required to provide a plurality of fluid pressure cylinders at the narrow pitches. However, due to a mutual interference between the fluid pressure cylinders, it is not possible to arrange the fluid pressure cylinders at the pitches smaller than the external size of the fluid pressure cylinder. This means that it is not possible to stop the pallet multiple times at the pitches smaller than the external size of the fluid pressure cylinder. In other words, the pitches of the positions for stopping the pallet are limited.

An object of the present invention is to achieve accurate positioning of the pallet by eliminating gaps between protrusions and recesses of an endless belt and protrusions and recesses of a pallet.

The object is achieved with a pallet conveying device according to claim 1.

The object is also achieved with a conveyed-pallet retaining method according to claim 5.

### BRIEF DESCRIPTION OF DRAWINGS

FIG. 1 is a plan view showing a pallet conveying device according to an embodiment of the present invention.
FIG. 2 is an enlarged view of a portion A in FIG. 1.
FIG. 3 is a diagram of a pallet mounted on a pallet rail, viewed from above.
FIG. 4 is a sectional view taken along B-B in FIG. 3.
FIG. 5 is an enlarged view of a portion C in FIG. 1 and shows a state in which a second pulley is attached.
FIG. 6 is a diagram showing FIG. 5, viewed from the D direction.

### DESCRIPTION OF EMBODIMENTS

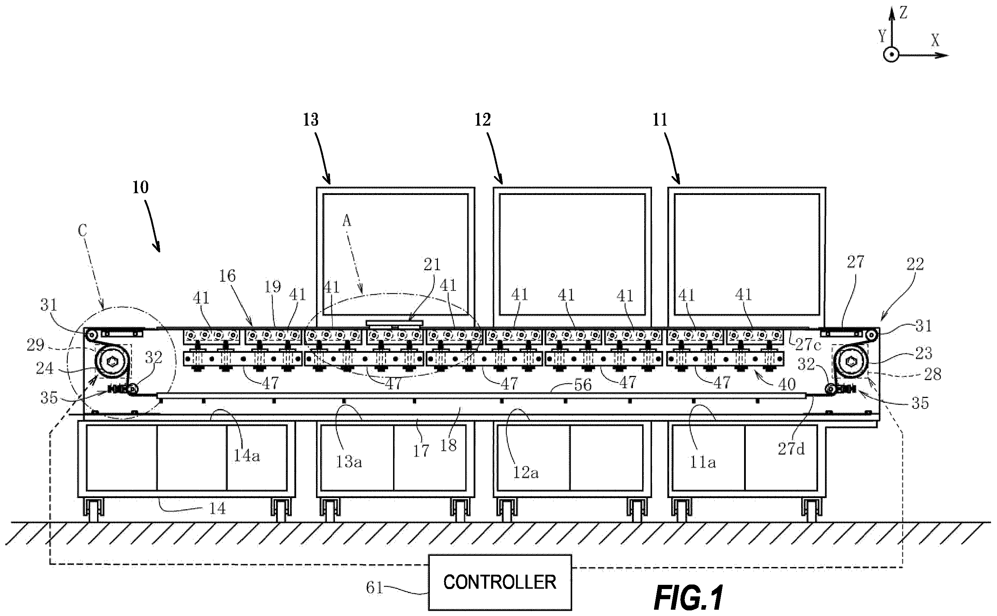

In the following, a pallet conveying device 10 according to an embodiment of the present invention will be described with reference to FIGs. 1 to 6.

In the respective figures, mutually orthogonal three axes X, Y, and Z are set. The configuration of the pallet conveying device 10 will be described by stating that the X axis extends in the substantially horizontal transverse direction, the Y axis extends in the substantially horizontal front-rear direction, and the Z axis extends in the vertical direction. The pallet conveying device 10 in this embodiment illustrates a device that is provided in a production line for stators of electric motors, such as motors, etc. As shown in FIG. 1, in the production line in this embodiment, three processing stations 11 to 13 are arranged linearly along the X axis direction at predetermined intervals.

The each of the processing stations 11 to 13 has a box shape and contains a machine tool (not shown) installed therein. The machine tools in the respective processing stations 11 to 13 automatically produce the stators (not shown) by performing various processing, such as an insertion of an insulating member, a swaging of a lead wire of a coil of various phase, an welding, and so forth, in a certain order, to a work (not shown) that is conveyed by the pallet conveying device 10. The pallet conveying device 10 is provided with a pallet rail 16 that links a standby position and the plurality of processing stations 11 to 13, which are arranged so as to be distributed along the line, and a pallet 21 mounted on the pallet rail 16.

The plurality of processing stations 11 to 13 are arranged linearly along the X axis direction, and a standby table 14 serving as the standby position is arranged on the extension line thereof. The plurality of processing stations 11 to 13 respectively have platforms 11a to 13a on which the pallet rail 16 is fixed. The standby table 14 is provided with a top plate 14a on which the pallet rail 16 is fixed.

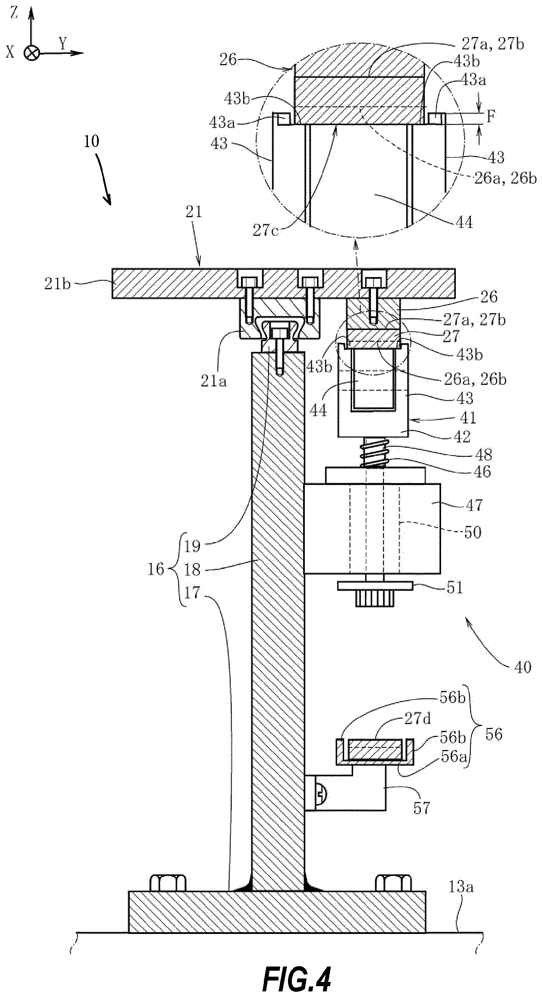

As shown in FIG. 4, the pallet rail 16 in this embodiment is provided with a support plate 18 with a cross-section having a rectangular shape elongated in the Z axis direction and a commercially available linear-motion guide rail 19 that is fixed to an upper edge of the support plate 18 by screws. An attachment plate 17 is welded to a lower end of the support plate 18. The attachment plate 17 is directly fixed to the platforms 11a to 13a of the respective processing stations 11 to 13 and the top plate 14a of the standby table 14 by screws (in FIG. 4, the attachment plate 17 is fixed to the platform 13a of the third processing station 13).

In other words, as shown in FIG. 1, the pallet rail 16 is fixed to the platforms 11a to 13a of the respective processing stations 11 to 13 and the top plate 14a by the screws. With such a configuration, the pallet rail 16 is fixed so as to link the standby position above the standby table 14 and the plurality of processing stations 11 to 13.

As shown in FIG. 4, the pallet 21 has linear motion blocks 21a that catch the pallet rail 16, a base 21b that is fixed to the linear motion blocks 21a by screws, and anchoring members 26 that are provided under the base 21b. The linear motion blocks 21a are configured so be movable on the pallet rail 16.

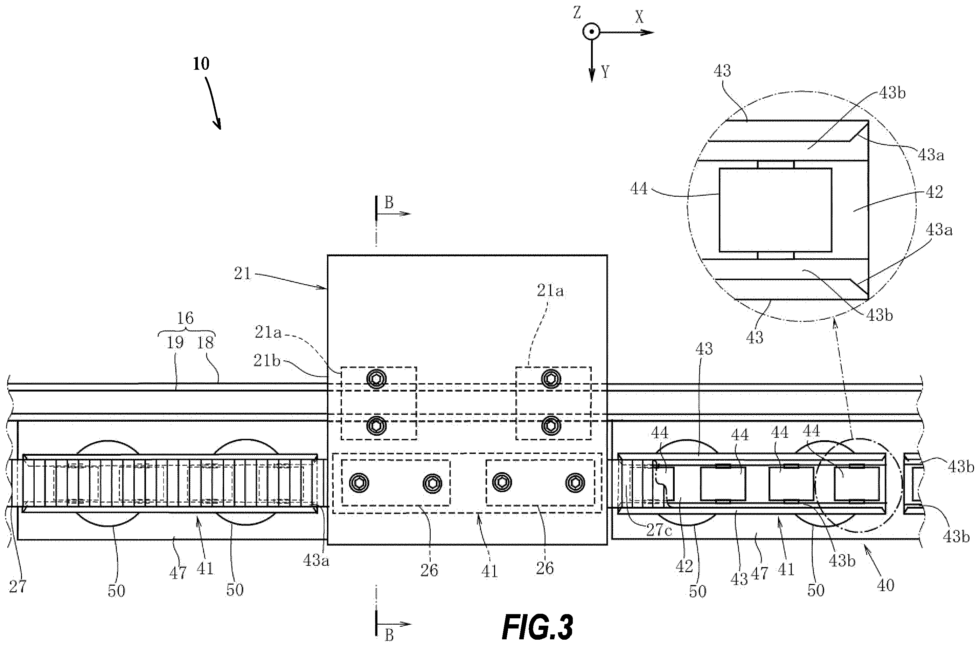

The linear motion block 21a is commercially available as a pair with the linear-motion guide rail 19 of the pallet rail 16. As shown in FIG. 3, two linear motion blocks 21a are provided under the base 21b so as to be separated from each other in the X axis direction. By using the linear motion blocks 21a, it is possible to reduce resistance caused for the movement of the pallet 21 on the pallet rail 16 while prohibiting the movement thereof in the width direction (in the Y axis direction). With such a configuration, the pallet 21 is movably mounted on the pallet rail 16.

A work supporting tool (not shown) for loading the work is further mounted on the base 21b of the pallet 21. The pallet 21 is capable of holding the work with the work supporting tool. Details of the anchoring members 26 will be described later.

As shown in FIG. 1, the pallet conveying device 10 is provided with pallet convey means 22 that conveys the pallet 21 along the pallet rail 16 between the standby position above the standby table 14 at which the pallet 21 is to be mounted and the plurality of processing stations 11 to 13 that are provided at positions away from the standby position. In this embodiment, the pallet convey means 22 is provided with an endless belt 27 that is provided so as to be able to circulate along the pallet rail 16.

On both ends of the pallet rail 16 in the longitudinal direction, a first pulley 23 and a second pulley 24, over which the endless belt 27 is suspended, are respectively provided. The first pulley 23 and the second pulley 24 in this embodiment are the same pulleys with the same shape and size. The pallet convey means 22 is further provided with a first actuator that rotationally drives the first pulley 23 and a second actuator that rotationally drives the second pulley 24.

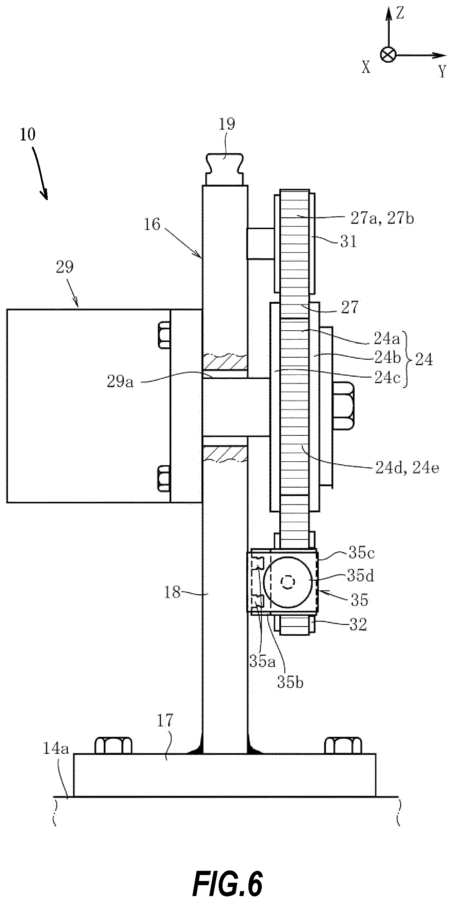

In this embodiment, a case in which both of the first pulley 23 and the second pulley 24 are rotated is shown. In the following, the second pulley 24 shown in FIG. 6 will be described as a representative. The second pulley 24 is provided with a pulley main body portion 24a around which the endless belt 27 is suspended and flanges 24b and 24c that are provided on both sides of the pulley main body portion 24a and that hold the endless belt 27 from the both sides in the width direction.

As shown in FIG. 1, the first actuator and the second actuator are electrically driven servomotors that respectively rotate the first pulley 23 and the second pulley 24. A first servomotor 28 serving as the first actuator, in which the first pulley 23 is attached to a rotating shaft, is attached to the first processing station 11, and a second servomotor 29 serving as the second actuator, in which the second pulley 24 is attached to a rotating shaft 29a, is attached to the standby table 14.

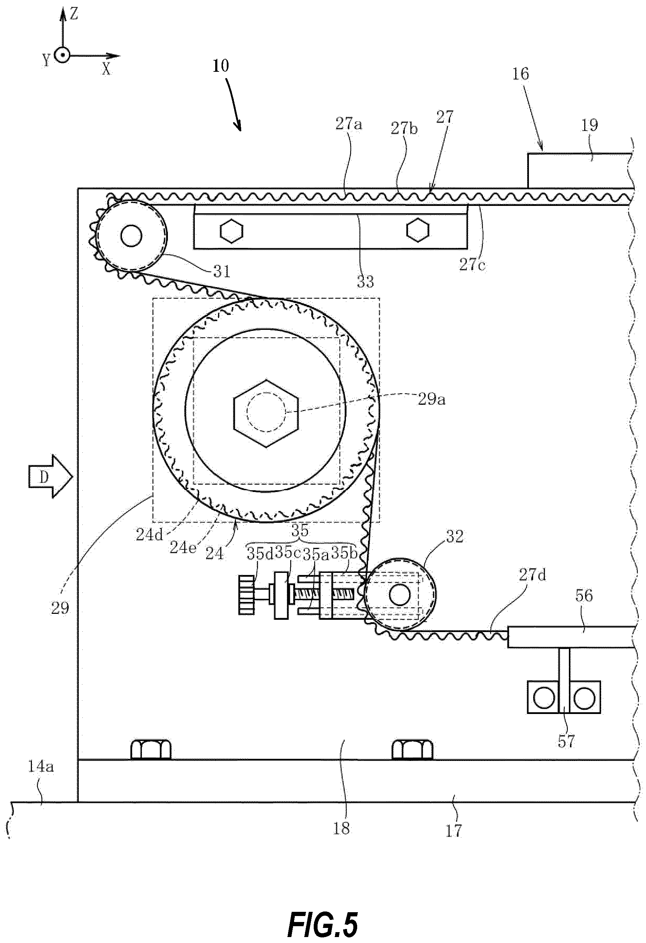

Because the first servomotor 28 and the second servomotor 29 have the same attachment configurations, the configuration for attaching the second servomotor 29 to the standby table 14 will be described as a representative. As shown in FIGs. 5 and 6, the support plate 18 of the pallet rail 16 is attached to the standby table 14, and the second servomotor 29 is attached to an end portion of the support plate 18 such that the rotating shaft 29a is aligned with the Y axis direction. The second pulley 24 is attached to the rotating shaft 29a of the second servomotor 29 extending in the Y axis direction.

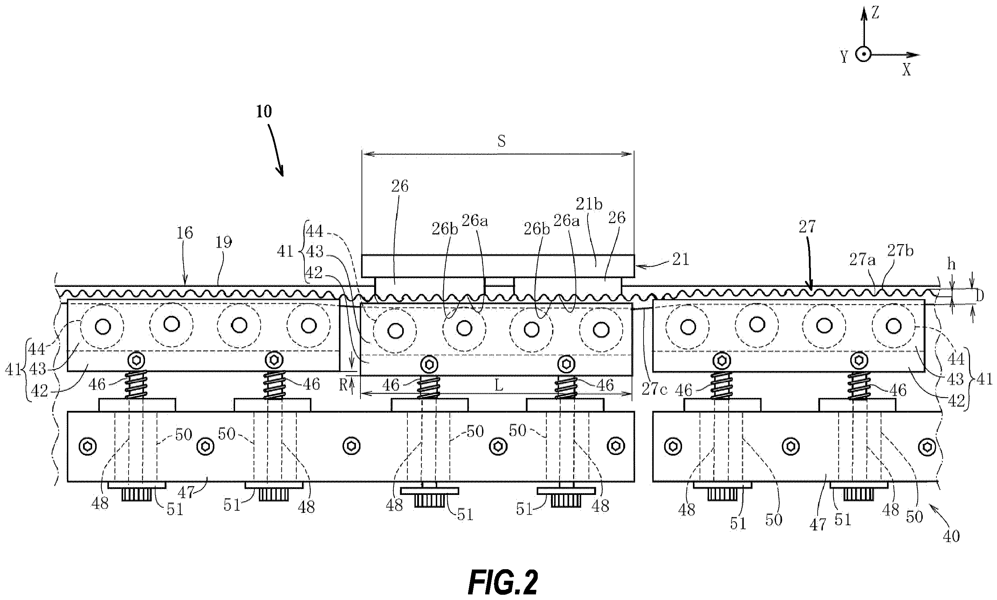

The endless belt 27 is a so-called synchronous belt. As shown in detail in FIG. 2, on the endless belt 27, protrusions and recesses 27a and 27b extending in the width direction are formed alternately in the longitudinal direction in a consecutive manner. The anchoring members 26 of the pallet 21 are formed with protrusions and recesses 26a and 26b that can engage with the protrusions and recesses 27a and 27b. In other words, the protrusions and recesses 26a and 26b are mesh teeth that mesh with the protrusions and recesses 27a and 27b of the endless belt 27.

As shown in FIG. 1, idle pulleys 31 are respectively provided on both end portions of the pallet rail 16. With such a configuration, on the upper region side of the pallet rail 16 where the pallet 21 is to be mounted, the endless belt 27 is provided such that the protrusions and recesses 27a and 27b face the outer side. On the upper region side of the pallet rail 16, which is the side where the pallet 21 is to be mounted, the idle pulleys 31 are respectively provided on the both sides of the pallet rail 16 in the longitudinal direction of the support plate 18. The idle pulleys 31 guide the endless belt 27 to the end portion of the pallet rail 16 in the longitudinal direction so as to extend along the pallet rail 16, and support the endless belt 27.

On the both end portions of the pallet rail 16, suspending pulleys 32 are respectively provided on the lower side of the first pulley 23 and the second pulley 24 such that the first pulley 23 and the second pulley 24 are respectively located between the suspending pulley 32 and the idle pulley 31. The suspending pulleys 32 press, together with the idle pulleys 31, the endless belt 27 towards the first pulley 23 and the second pulley 24 from the inner side of the pallet rail 16 in the longitudinal direction such that the endless belt 27 is suspended around the first pulley 23 and the second pulley 24.

A detailed description will be given with reference to the configuration on the second pulley 24 side. As shown in FIG. 5, the endless belt 27 is suspended around an outer circumference of the second pulley 24. The outer circumference of the second pulley 24 is formed with protrusions and recesses 24d and 24e, which are capable of engaging with the protrusions and recesses 27a and 27b of the endless belt 27, in the circumferential direction in a consecutive manner. The suspending pulleys 32 press, together with the idle pulleys 31, the endless belt 27 towards the second pulley 24 from the inner side of the pallet rail 16 in the longitudinal direction. With such a configuration, the endless belt 27 is suspended around the second pulley 24.

The suspending pulleys 32 are respectively provided on the both sides of the pallet rail 16 in the longitudinal direction of the support plate 18 via position adjusting mechanisms 35. As shown in FIGs. 5 and 6, each of the position adjusting mechanisms 35 is provided with small rails 35a that are provided so as to extend in the longitudinal direction of the support plate 18, a pivotably supporting stage 35b that is provided on the small rails 35a so as to be movable, a support stage 35c that is attached to the support plate 18, and a screw member 35d that is provided on the support stage 35c so as to move the pivotably supporting stage 35b along the small rails 35a.

The suspending pulley 32 is pivotably supported by the pivotably supporting stage 35b of the position adjusting mechanism 35. By adjusting the position of the pivotably supporting stage 35b in the longitudinal direction of the support plate 18 by moving the pivotably supporting stage 35b by the screw member 35d, it is possible to adjust the position of the suspending pulley 32 in the longitudinal direction of the pallet rail 16.

By moving the suspending pulleys 32 provided on the both ends of the pallet rail 16 so as to be separated away from each other, it is possible to apply tension on the endless belt 27 that is suspended over the suspending pulleys 32. As the tension is applied to the endless belt 27, the endless belt 27 extending between the suspending pulley 32 and the idle pulley 31 are respectively pressed against the first pulley 23 and the second pulley 24. Thus, the protrusions and recesses 27a and 27b are caused to engage with the protrusions and recesses of the first pulley 23 and the second pulley 24 without forming a gap therebetween. Therefore, by rotating the first pulley 23 and the second pulley 24, it is possible to cause the endless belt 27 to circulate without deviation.

Reference sign 33 in FIG. 5 shows a belt receiver 33 that is provided on the support plate 18 in the vicinity of the idle pulley 31. The belt receiver 33 is provided so as to extend in parallel with an upper region side belt 27c (the upper region side belt 27c of the endless belt 27) that is suspended over the two idle pulleys 31. When the upper region side belt 27c is deflected at the vicinity of the idle pulleys 31, the belt receiver 33 comes into contact with the upper region side belt 27c to suppress further deflection and/or vibration.

As shown in FIG. 1, the first pulley 23 is provided on the first processing station 11, and the second pulley 24 is provided on the standby table 14. The endless belt 27 that is suspended and tensioned around the first pulley 23 and the second pulley 24 is provided so as to link the standby position and the first processing station 11 at the most distant from the standby position along the pallet rail 16.

The first servomotor 28 and the second servomotor 29 that respectively rotate the first pulley 23 and the second pulley 24 are respectively connected to control outputs from a controller 61. The controller 61 is configured so as to perform a synchronous control of the first servomotor 28 and the second servomotor 29. As the first servomotor 28 and the second servomotor 29 are driven by the synchronous control performed on the basis of instructions from the controller 61, the first pulley 23 and the second pulley 24 are also rotated together with the rotating shafts of the first servomotor 28 and the second servomotor 29. When the first pulley 23 and the second pulley 24 are rotationally driven in a state in which the endless belt 27 is tensioned, the endless belt 27 that is suspended by extending in the longitudinal direction of the pallet rail 16 is circulated.

The endless belt 27 is provided such that the protrusions and recesses 27a and 27b face outer side. Thus, as shown in FIG. 2, the upper region side belt 27c of the endless belt 27 extends along the pallet rail 16 in a state in which the protrusions and recesses 27a and 27b face upward. Lower surfaces of the anchoring members 26 that are provided under the base 21b are formed with the protrusions and recesses 26a and 26b that engage with the protrusions and recesses 27a and 27b.

In other words, as the pallet 21 is mounted on the pallet rail 16 and the anchoring members 26 are placed from above over the upper region side belt 27c that is provided along the pallet rail 16, the protrusions and recesses 27a and 27b formed on the endless belt 27 are caused to engage with the protrusions and recesses 26a and 26b of the anchoring members 26.

Once the protrusions and recesses 26a and 26b of the pallet 21 engage with the protrusions and recesses 27a and 27b of the endless belt 27, the movement of the pallet 21 in the longitudinal direction independent of the endless belt 27 is prohibited . With such a configuration, the pallet 21 is anchored to the endless belt 27. As described-above, the pallet 21 mounted on the pallet rail 16 can be anchored by the endless belt 27 serving as the synchronous belt.

As the endless belt 27 to which the pallet 21 is anchored is circulated, the pallet 21 is moved along the pallet rail 16 together with the endless belt 27. Thus, the pallet 21 can be conveyed, together with the work (not shown) loaded on the pallet 21, along the pallet rail 16 along which the endless belt 27 extends.

Belt supporting devices 40 are provided on the support plate 18. The belt supporting devices 40 prevent disengagement between the protrusions and recesses 27a and 27b of the endless belt 27 and the protrusions and recesses 26a and 26b of the anchoring members 26 that may be caused when the endless belt 27 is deflected and separated from the anchoring members 26.

As shown in FIGs. 2 to 4, and according to the invention, each of the belt supporting devices 40 has: carrying tools 41 on which the upper region side belt 27c engaged with the anchoring members 26 is carried so as to be movable in the longitudinal direction; and coil springs 46, each serving as biasing means, that bias the carrying tools 41 such that the protrusions and recesses 27a and 27b of the upper region side belt 27c carried on the carrying tools 41 are pressed against the protrusions and recesses 26a and 26b of the anchoring members 26.

As shown in FIGs. 2 and 4, and according to the invention, the carrying tools 41 are located under the upper region side belt 27c and each has: a bottom plate 42 that extends in the longitudinal direction of the upper region side belt 27c; a pair of side walls 43 and 43 that are provided on both sides of the bottom plate 42 so as to be erected upright and so as to sandwich the upper region side belt 27c from both sides in the width direction; and a plurality of rollers 44 that are provided between the pair of side walls 43 and 43.

As shown in FIG. 2, the lengths L of the bottom plate 42 and the pair of side walls 43 and 43 in the longitudinal direction of the upper region side belt 27c are set so as to be substantially equal to or slightly smaller than the length S of the base 21b in the longitudinal direction of the pallet rail 16. As shown in FIG. 4, stepped portions 43b, into which both sides of the endless belt 27 respectively fall, are respectively formed on upper edges of the pair of side walls 43 and 43.

As shown in FIGs. 2 and 3, in this embodiment, the four rollers 44 are respectively provided between the pair of side walls 43 and 43 so as to be aligned in the extending direction of the endless belt 27 and so as to be rotatable. The upper region side belt 27c side edges of which respectively enter the stepped portions 43b in between the pair of side walls 43 and 43 comes into contact with the four rollers 44. As the four rollers 44 are rotated, it is possible to circulate the endless belt 27 without resistance. As shown in an enlarged view in FIG. 3, inclined surfaces 43a that guide the endless belt 27 between the pair of side walls 43 and 43 are respectively formed on both sides of the pair of side walls 43 and 43 in the longitudinal direction.

The coil springs 46 bias the carrying tool 41 such that the protrusions and recesses 27a and 27b of the upper region side belt 27c carried by the carrying tool 41 are pressed against the protrusions and recesses 26a and 26b of the anchoring members 26. Housings 47 are attached to the support plate 18 of the pallet rail 16. Each of the housings 47 supports a plurality of carrying tools 41 (two carrying tools 41 in this embodiment). Supporting shafts 48 penetrate through the housing 47 in the vertical direction. The supporting shafts 48 are provided so as to be movable in the shaft direction.

The carrying tool 41 is attached to upper ends of the supporting shafts 48. In this embodiment, a single carrying tool 41 is supported by two supporting shafts 48. As shown in FIG. 2, the housing 47 supporting the two carrying tools 41 is provided with the four supporting shafts 48 at predetermined intervals in the longitudinal direction of the housing 47. Two carrying tools 41 are separately and independently attached on the upper ends of the four supporting shafts 48. Reference signs 50 show slide bushes 50 that are provided in the housing 47 to support the supporting shafts 48 so as to be movable in the shaft direction.

The coil springs 46 are respectively interposed at the supporting shafts 48 between the carrying tools 41 and the housing 47 in a compressed state. An extending force exerted by the coil springs 46 acts in the direction in which the carrying tools 41 are separated away from the housing 47. In a state in which the pallet 21 faces the carrying tool 41, the upper region side belt 27c carried by the carrying tool 41 is pressed against the anchoring member 26. In this embodiment, the biasing force exerted by the coil spring 46 is set to be from 0.8 to 1.2 N.

As in the carrying tools 41 shown on both sides in FIG. 2, in a state in which the pallet 21 is not facing the carrying tool 41, the supporting shafts 48 move upward in the Z axis direction by the biasing force exerted by the coil springs 46. However, ring members 51 are respectively attached to lower parts of the supporting shafts 48 penetrating through the housing 47. As the supporting shafts 48 move upward together with the carrying tool 41 and the ring members 51 come into contact with a lower surface of the housing 47, a further upward movement of the supporting shafts 48 is prohibited. In other words, the ring members 51 limit a movable range R of the carrying tool 41.

The movable range R of the carrying tool 41 in this embodiment, in other words, a lifted amount of the carrying tool 41 from the position of the carrying tool 41 in a state in which the upper region side belt 27c carried by the carrying tool 41 is pressed against the anchoring members 26 of the pallet 21 to the position of the carrying tool 41 in a state in which the pallet 21 is not present is less than the height h of the protrusions and recesses 27a and 27b of the endless belt 27. In addition, as shown in the enlarged view in FIG. 3, the depth F of the stepped portions 43b formed in the upper edges of the pair of side walls 43 and 43 is larger than the movable range R of the carrying tools 41 and smaller than the thickness D of the endless belt 27 (FIG. 2).

The belt supporting devices 40 having the carrying tools 41 and the coil springs 46 as described above are provided at least at positions where the pallet 21 needs to be stopped by stopping the conveyance of the pallet 21.

In this embodiment, the pallet conveying device 10 is provided so as to link the respective processing stations 11 to 13. The machine tool in each of the processing stations 11 to 13 performs various processing on the work conveyed by the pallet conveying device 10. Thus, the conveyance of the pallet 21 on which the work is loaded needs to be stopped in a state in which the pallet 21 is facing each of the processing stations 11 to 13 until the processing performed by the machine tool in each of the processing stations 11 to 13 is finished. Therefore, the belt supporting devices 40 are provided at least at the positions opposing to the respective processing stations 11 to 13.

However, as shown in FIG. 1, the plurality of carrying tools 41 are provided on the support plate 18 of the pallet rail 16 in the longitudinal direction in a continuous manner. In other words, in this embodiment, a plurality of housings 47 that support the carrying tools 41 are also provided in a continuous manner such that the carrying tools 41 are provided continuously over the entire length of the pallet rail 16, which links the standby position and the plurality of processing stations 11 to 13.

A belt rail 56 is attached via a plurality of attachment members 57 under the housings 47 on the support plate 18. The plurality of attachment members 57 are provided at predetermined intervals in the longitudinal direction of the belt rail 56. The belt rail 56 supports a lower region side belt 27d, extending between the suspending pulleys 32, of the endless belt 27 that is suspended around the first pulley 23 and the second pulley 24 at its both ends. With such a configuration, the deflection of the lower region side belt 27d is suppressed. As shown in FIG. 4, the belt rail 56 is a long object having a flat plate 56a receiving the lower region side belt 27d and flanges 56b that are respectively erected upright on both sides of the flat plate 56a.

Next, a conveyed-pallet retaining method using the pallet conveying device 10 will be described.

The conveyed-pallet retaining method of this embodiment includes: a step of mounting the pallet 21 on the pallet rail 16, a step of conveying the pallet 21 by circulating the endless belt 27 in a state in which the protrusions and recesses 26a and 26b formed on the pallet 21 are engaged with the protrusions and recesses 27a and 27b of the endless belt 27 extending along the pallet rail 16, and a step of retaining the pallet 21 at a desired position by stopping the circulation of the endless belt 27.

Furthermore, in this embodiment, when the pallet 21 is retained at a desired position by stopping the circulation of the endless belt 27, the protrusions and recesses 27a and 27b of the endless belt 27 are pressed against the protrusions and recesses 26a and 26b of the pallet 21.

In this embodiment, the pallet 21 is conveyed between the standby position and the plurality of processing stations 11 to 13. The work (not shown) to be processed is loaded on the pallet 21. The loading of the work onto the pallet 21 is performed in a state in which the pallet 21 is mounted on the pallet rail 16 at the standby position or performed by mounting the pallet 21, on which the work has been loaded in advance, on the pallet rail 16 at the standby position.

After the pallet 21 is mounted on the pallet rail 16, the anchoring members 26 of the pallet 21 that are provided under the base 21b are placed from above over the upper region side belt 27c provided along the pallet rail 16. By doing so, the protrusions and recesses 27a and 27b of the endless belt 27 engage with the protrusions and recesses 26a and 26b of the anchoring members 26.

Once the protrusions and recesses 26a and 26b of the pallet 21 engage with the protrusions and recesses 27a and 27b of the endless belt 27, the movement of the pallet 21 in the longitudinal direction independent of the endless belt 27 is prohibited. Thus, by circulating the endless belt 27, it is possible to convey the pallet 21.

The circulation of the endless belt 27 is performed by rotating the first pulley 23 and the second pulley 24 shown in FIG. 1. The rotation of the first pulley 23 and the second pulley 24 is performed by synchronously driving the first servomotor 28 and the second servomotor 29 for rotationally driving the first pulley 23 and the second pulley 24 in accordance with the instructions from the controller 61. As the first pulley 23 and the second pulley 24 are both rotated in the same direction and at the same speed, and as the endless belt 27 that is suspended around the first pulley 23 and the second pulley 24 is circulated, the pallet 21 anchored to the endless belt 27 is conveyed along the pallet rail 16.

In this embodiment, as the pallet 21 is conveyed from the standby position, the pallet 21 faces the third processing station 13 first. At a stage where the pallet 21 faces the third processing station 13, the first servomotor 28 and the second servomotor 29 are halted to stop the circulation of the endless belt 27. By doing so, the pallet 21 anchored to the endless belt 27 is maintained at a state in which the pallet 21 faces the third processing station 13 and the pallet 21 is retained or made stationary at that position. Then, the machine tool (not shown) in the third processing station 13 is operated to perform a predetermined processing to the work loaded on the pallet 21.

After the processing is finished at the third processing station 13, the first servomotor 28 and the second servomotor 29 are again subjected to the synchronous control to rotate the first pulley 23 and the second pulley 24 at the same time, in the same direction, and at the same speed. By doing so, the endless belt 27 is circulated and the pallet 21 is conveyed again.

As described above, by causing the pallet 21 to face the respective processing stations 11 to 13 sequentially, the work is subjected to the processing. Finally, at the stage in which the pallet 21 faces the first processing station 11 at the most distant from the standby position, the first servomotor 28 and the second servomotor 29 are halted to stop the circulation of the endless belt 27. By doing so, the pallet 21 anchored to the endless belt 27 is maintained at a state in which the pallet 21 faces the first processing station 11 at the most distant from the standby position and the pallet 21 is retained or made stationary at that position. The work loaded on the pallet 21 is then subjected to the processing at the first processing station 11, thereby finishing a series of processing at the respective processing stations 11 to 13.

After the processing is finished at each of the processing stations 11 to 13, the pallet 21 facing the first processing station 11 is moved in the opposite direction and returned to the standby position. The backward movement of the pallet 21 is performed by circulating the endless belt 27 in the reverse direction. The endless belt 27 is circulated in the reverse direction by reversing the rotating directions of the first servomotor 28 and the second servomotor 29 and rotating the first pulley 23 and the second pulley 24 in the reverse direction in a synchronous manner.

As described above, by circulating the endless belt 27 in the reverse direction, it is possible to return the pallet 21 anchored to the endless belt 27 to the standby position. Once the pallet 21 is returned to the standby position, the first servomotor 28 and the second servomotor 29 are halted to stop the circulation of the endless belt 27. By doing so, a state in which the pallet 21 anchored to the endless belt 27 is retained at the standby position of the pallet rail 16 is maintained.

At the standby position of the pallet rail 16, the work loaded on the pallet 21 is exchanged or the pallet 21 on which the processed work is loaded is removed and new pallet 21 on which another work is loaded is mounted on the pallet rail 16. Then, the pallet 21 is conveyed again to each of the processing stations 11 to 13, and the processing is performed on the other work at the respective processing stations 11 to 13.

As described above, in this embodiment, the pallet 21 engaged with the endless belt 27 is conveyed or retained at a predetermined position by rotating the first pulley 23 and the second pulley 24 in a synchronous manner to circulate the endless belt 27 or to stop the circulation of the endless belt 27 as required.

Especially, in this embodiment, as shown in FIG. 1, the endless belt 27 is suspended by the idle pulleys 31 and the suspending pulleys 32 such that the endless belt 27 is pressed against the first pulley 23 and the second pulley 24 from the inside in the longitudinal direction of the pallet rail 16. Therefore, it is possible to apply tension to the endless belt 27. Thus, the protrusions and recesses 27a and 27b of the endless belt 27 are engaged with the protrusions and recesses 24d and 24e of the first pulley 23 and the second pulley 24 (see FIG. 5) so as not to form any gaps therebetween. With such a configuration, it is possible to directly convert the rotational motion of the first pulley 23 and the second pulley 24 to the circulating motion of the endless belt 27 accurately.

The first pulley 23 and the second pulley 24 are driven by the synchronous control according to the instructions from the controller 61 by using the first servomotor 28 and the second servomotor 29 as the first actuator and the second actuator for rotationally driving the first pulley 23 and the second pulley 24. Thus, the endless belt 27 is pulled by a first pulley (the first pulley 23) being rotated and pushed towards the first pulley (the first pulley 23) by a second pulley (the second pulley 24). In addition, the endless belt 27 is pushed by the first pulley (the first pulley 23) being rotated and pulled by the second pulley (the second pulley 24). With such a configuration, compared with a case in which only a single pulley is rotated, it is possible to suppress the deflection, elongation, and so forth of the endless belt 27. Thus, it is possible to avoid occurrence of variation in circulation speed of the endless belt 27. By avoiding the occurrence of the variation in the circulation speed, it is possible to circulate the endless belt 27 accurately and to increase the accuracy of the conveyance of the pallet 21 anchored to the endless belt 27.

For the relationship between the endless belt 27 and the pallet 21, as shown in FIG. 2, the synchronous belt is used as the endless belt 27, and the protrusions and recesses 26a and 26b of the pallet 21 are engaged with the protrusions and recesses 27a and 27b. However, a gap is formed therebetween. Therefore, even if the position of the endless belt 27 during the circulation can be controlled accurately, the position of the pallet 21 anchored to the endless belt 27 is deviated by an amount corresponding to the gap.

In contrast, the belt supporting devices 40 are provided on the support plate 18 of the pallet rail 16. The belt supporting devices 40 are provided at least at locations where the pallet 21 needs to be stopped at a predetermined position, in other words, at the locations where the belt supporting devices 40 respectively face the processing stations 11 to 13. Thus, by causing the pallet 21 to face each of the processing stations 11 to 13 by stopping the circulation of the endless belt 27, the pallet 21 also faces each of the belt supporting devices 40 at the same time.

As the pallet 21 is stopped and faces the belt supporting device 40, the coil springs 46 of the belt supporting device 40 bias the carrying tool 41 such that the protrusions and recesses 27a and 27b of the upper region side belt 27c carried by the carrying tool 41 are pressed against the protrusions and recesses 26a and 26b of the anchoring members 26. Therefore, the gap between the protrusions and recesses 27a and 27b of the endless belt 27 and the protrusions and recesses 26a and 26b of the anchoring members 26 under mutual engagement is squeezed and eliminated by the biasing force. Thus, the position of the pallet 21 relative to the endless belt 27 is maintained at the accurate position.

In this embodiment, the protrusions and recesses 27a and 27b are pressed against the protrusions and recesses 26a and 26b by the carrying tool 41 that is provided at a retaining position of the pallet 21 in advance and that movably carries the endless belt 27. Thus, it is possible to prevent the endless belt 27 from being damaged when the protrusions and recesses 27a and 27b are pressed against the protrusions and recesses 26a and 26b. In addition, because the biasing force exerted by the coil springs 46 per unit area of the carrying tools 41 is from 0.8 to 1.2 N, it is possible to reliably squeeze the gap between the protrusions and recesses 27a and 27b of the endless belt 27 and the protrusions and recesses 26a and 26b of the pallet 21 without using excessive biasing means.

As described above, in this embodiment, by eliminating the gap between the protrusions and recesses 27a and 27b and the protrusions and recesses 26a and 26b, the pallet 21 is allowed to be retained at the accurate position. Thus, the pallet-movement locking mechanism that has been required for accurate positioning of the pallet in the conventional technique is no longer required. Therefore, the time required for the extension or the contraction of the fluid pressure cylinder and the confirmation time required for a sensor to detect completion of the extension or the contraction need not be required for the conventional pallet-movement locking mechanism.

In this embodiment, when the circulation of the endless belt 27 is stopped, it is possible to readily start the processing in the respective processing stations 11 to 13. After the processing is finished, the circulation of the endless belt 27 is started readily, thereby conveying the pallet 21 readily. Thus, compared with the case in which the conventional pallet-movement locking mechanism is used, time required for the operation and confirmation is no longer required, and so, it is possible to perform the conveyance of the pallet 21 without delay.

In addition, because the pallet-movement locking mechanism that has been required in the conventional pallet conveying device is no longer required, the limitation to the pitch of the positions for stopping the pallet, which had been caused by the provision of the pallet-movement locking mechanism, is also eliminated. Thus, it is also possible to perform retaining of the pallet 21 at narrow pitches for multiple times. In other words, it is possible to retain the pallet 21 accurately even at relatively small pitches.

In a case in which the conventional pallet-movement locking mechanism is not provided, if the work loaded on the pallet 21 is processed after the pallet 21 is retained, an external force applied to the work during the processing may act as the biasing force in the direction in which the pallet 21 is moved.

In contrast, the circulation of the endless belt 27 in the pallet conveying device 10 is performed by rotationally driving the first pulley 23 by the first actuator and by rotationally driving the second pulley 24 by the second actuator, which is controlled in a synchronous manner with the first actuator. The stopping of the circulation of the endless belt 27 is also performed by actively stopping the rotation of the first pulley 23 and the second pulley 24 by both of the first actuator and the second actuator.

In such a case, the biasing force applied to the pallet 21 via the work during the processing of the work is converted as a force that rotates the first pulley 23 and the second pulley 24 on the both sides of the endless belt 27, which is suspended around the first pulley 23 and the second pulley 24, in the conveying direction. By using actuators capable of coping with such a force as the first actuator and the second actuator, it is possible to surely maintain a state in which the pallet 21 is retained at the accurate position even under the external force being applied to the work.

In this embodiment, as the first actuator and the second actuator for rotationally driving the first pulley 23 and the second pulley 24, electrically driven servomotors capable of changing the rotation speed and rotation torque of the first pulley 23 and the second pulley 24 are used. Thus, it is possible to circulate the endless belt 27 accurately, and when the endless belt 27 is stopped, the stopped state can be maintained surely even if a tension is applied to the endless belt 27. Thus, it is possible to maintain the retained state of the pallet 21 anchored to the endless belt 27 with reliability.

In this embodiment, the plurality of carrying tools 41 are provided along the longitudinal direction of the pallet rail 16 in a continuous manner. Thus, the carrying tools 41 are provided at other locations than the locations opposing to the respective processing stations 11 to 13. With such a configuration, even in a case in which the positions of the processing stations 11 to 13 are changed or in which a new processing station is added, there is no need to additionally provide the belt supporting devices 40 in accordance with the change in the positions or the added processing station. Thus, the degree of freedom for providing the processing station or changing the positions is increased.

The movable range R of the carrying tools 41 is limited so as to be smaller than the height h of the protrusions and recesses 27a and 27b of the endless belt 27. Thus, when the pallet 21 is moved from the carrying tool 41 to the adjacent carrying tool 41, the upper region side belt 27c is prevented from being disengaged from the adjacent carrying tool 41. Therefore, the endless belt 27 can be circulated stably, and so, it is possible to convey and retain the pallet 21 anchored to the endless belt 27 in a stable manner.

As described above, the pallet conveying device 10 is provided with: the pallet rail 16 configured to mount the pallet 21 in a manner movable in the longitudinal direction; the endless belt 27 provided along the pallet rail 16 so as to be able to be circulated, the endless belt 27 being provided with the protrusions and recesses 27a and 27b extending in the width direction, and the protrusions and recesses 27a and 27b being provided alternately in the longitudinal direction in a consecutive manner; the protrusions and recesses 26a and 26b formed on the pallet 21 so as to be able to engage with the protrusions and recesses 27a and 27b of the endless belt 27; and the belt supporting device 40 provided on the pallet rail 16, the belt supporting device 40 being configured to support the endless belt 27 such that the protrusions and recesses 27a and 27b of the endless belt 27 engage with the protrusions and recesses 26a and 26b of the pallet 21 in a state in which the pallet 21 is mounted on the pallet rail 16.

The belt supporting device 40 has: the carrying tool 41 configured to carry the endless belt 27 in a movable manner; and the coil springs 46 serving as the biasing means configured to bias the carrying tool 41 such that the protrusions and recesses 27a and 27b of the endless belt 27 carried by the carrying tool 41 are pressed against the protrusions and recesses 26a and 26b of the pallet 21.

It is preferable that the length of the carrying tool 41 in the longitudinal direction of the pallet rail 16 be limited so as to be equal to or smaller than the length of the pallet 21, and the plurality of carrying tools 41 be provided in the longitudinal direction of the pallet rail 16 in a continuous manner.

It is preferable that the movable range R of the carrying tool 41 by the biasing means be limited so as to be smaller than the height of the protrusions and recesses 27a and 27b of the endless belt 27. It is preferable that the biasing force exerted by the biasing means to bias the carrying tools 41 be from 0.8 to 1.2 N.

The conveyed-pallet retaining method includes: a step of mounting the pallet 21 on the pallet rail 16; a step of engaging the protrusions and recesses 26a and 26b formed on the pallet 21 with the protrusions and recesses 27a and 27b of the endless belt 27 extending along the pallet rail 16; a step of conveying the pallet 21 by circulating the endless belt 27; and a step of retaining the pallet 21 by stopping the circulation of the endless belt 27.

When the pallet 21 is retained by stopping the circulation of the endless belt 27, the protrusions and recesses 27a and 27b of the endless belt 27 are pressed against the protrusions and recesses 26a and 26b of the pallet 21.

It is preferable that the protrusions and recesses 27a and 27b of the endless belt 27 be pressed against the protrusions and recesses 26a and 26b of the pallet 21 by the carrying tool 41, the carrying tool 41 being provided at the retaining position of the pallet 21 in advance, and the carrying tool 41 being configured to carry the endless belt 27 in a movable manner.

With the pallet conveying device 10 and the conveyed-pallet retaining method according to this embodiment, when the pallet 21 is retained at a desired position by stopping the circulation of the endless belt 27, the protrusions and recesses 27a and 27b of the endless belt 27 are pressed against the protrusions and recesses 26a and 26b of the pallet 21 by the belt supporting devices 40. Thus, the gap between the protrusions and recesses 27a and 27b of the endless belt 27 and the protrusions and recesses 26a and 26b of the pallet 21 under mutual engagement is squeezed and eliminated. Therefore, it is possible to maintain the pallet 21 at the accurate position with respect to the endless belt 27.

By accurately controlling the circulation and the stopping of the endless belt 27, it is possible to accurately retain the pallet 21 at the desired position without using the pallet-movement locking mechanism, which has been required in the conventional technique. In addition, it is possible to maintain a state in which the pallet 21 is retained at the desired position with reliability.

In addition, because the pallet-movement locking mechanism, which has been required in the conventional technique, is no longer required, the limitation to the pitch of the positions for stopping the pallet, which had been caused by the provision of the pallet-movement locking mechanism, is eliminated. Thus, in this embodiment, it may be possible to accurately stop the pallet 21 even at relatively small pitches.

Although the embodiment of the present invention has been described in the above, the above-mentioned embodiment merely illustrates a part of application examples of the present invention, and the technical scope of the present invention is not intended to be limited to the specific configurations of the above-described embodiment.

In the above-described embodiment, a description has been given of a case in which the first servomotor 28 and the second servomotor 29 serving as the first actuator and the second actuator are controlled synchronously to rotate the first pulley 23 and the second pulley 24 at the same time, in the same direction, and at the same speed. However, as long as no variation is caused in the circulation speed of the endless belt 27, the endless belt 27 may be circulated by rotating either one of the first pulley 23 and the second pulley 24.

In the above-described embodiment, a description has been given of a case in which a single pallet 21 is mounted on the pallet rail 16 and the pallet 21 is conveyed in a reciprocating manner. However, the plurality of pallets 21 may be mounted on the pallet rail 16. In this case, other circulation rail than the pallet rail 16 may be used to circulate the plurality of pallets 21.

In the above-described embodiment, a description has been given of a case in which the first actuator and the second actuator are the electrically driven servomotors. However, as long as the first pulley 23 and the second pulley 24 can be rotated, the fluid pressure cylinder or a fluid pressure motor may be used as the first actuator and the second actuator.

In the above-described embodiment, a description has been given of a case in which the lengths L of the carrying tools 41 are limited so as to be the same as or so as to be equal to or smaller than the length S of the pallet 21, and the plurality of carrying tools 41 are provided in the longitudinal direction of the pallet rail 16 in a continuous manner. However, it suffices that the carrying tools 41 are provided at locations where the pallet 21 needs to be retained after the conveyance has been stopped, and the carrying tools 41 may not necessarily be provided at other locations.

In the above-described embodiment, the length L of the carrying tool 41 is limited so as to the same as or equal to or smaller than the length S of the pallet 21. However, as long as the location where the pallet 21 needs to be retained is included, the carrying tool 41 having the length L exceeding the length S of the pallet 21 may be used. For example, it may be possible to employ a structure in which the carrying tool 41 having a length that extends over the entire length of the pallet rail 16 is used, and the protrusions and recesses 27a and 27b of the endless belt 27 carried by the carrying tool 41 are pressed against the protrusions and recesses 26a and 26b of the pallet 21 mounted on the pallet rail 16 by the biasing means.

In the above-described embodiment, a description has been given of a case in which each of the housings 47 supports the two carrying tools 41. However, a number of the carrying tools 41 supported by a single housing 47 is not limited to two, and three or more carrying tools 41 may be supported.

## Claims

1. A pallet conveying device (10) comprising:
a pallet rail (16) configured to mount a pallet (21) in a manner movable in a longitudinal direction;
an endless belt (27) provided along the pallet rail (16) so as to be able to be circulated, the endless belt (27) being provided with protrusions (27b) and recesses (27a) extending in a width direction, and the protrusions (27b) and recesses (27a) being provided alternately in the longitudinal direction in a consecutive manner; and
a plurality of belt supporting devices (40) provided on the pallet rail (16), each of the belt supporting devices (40) being configured to support the endless belt (27) such that the protrusions (27b) and
recesses (27a) of the endless belt (27) engage with anchoring members (26) of the pallet (21) formed with protrusions (26b) and recesses (26a)
in a state in which the pallet (21) is mounted on the pallet rail (16), **characterized in that**
each of the belt supporting devices (40) has:
carrying tools (41) on which the upper region side belt (27c) of the endless belt (27) engaged with the anchoring members (26) is carried so as to be movable in the longitudinal direction; and
coil springs (46), each serving as biasing means, that bias the carrying tools (41) such that the protrusions (27b) and recesses (27a) of the upper region side belt (27c) carried on the carrying tools (41) are pressed against the protrusions (26b) and recesses (26a) of the anchoring members (26), and
the carrying tools (41) are located under the upper region side belt (27c) and each has:
a bottom plate (42) that extends in the longitudinal direction of the upper region side belt (27c);
a pair of side walls (43, 43) that are provided on both sides of the bottom plate (42) so as to be erected upright and so as to sandwich the upper region side belt (27c) from both sides in the width direction; and
a plurality of rollers (44) that are provided between the pair of side walls (43, 43).

2. The pallet conveying device (10) according to claim 1, wherein
a length of the carrying tool (41) in the longitudinal direction of the pallet rail (16) is equal to or less than a length of the pallet (21), and
the plurality of the carrying tools (41) are provided in the longitudinal direction of the pallet rail (16) in a continuous manner.

3. The pallet conveying device (10) according to claim 1 or 2, wherein
a movable range of the carrying tool (41) by the biasing means (46) is smaller than a height of the protrusions (27b) and recesses (27a) of the endless belt (27).

4. The pallet conveying device (10) according to any one of claims 1 to 3, wherein
a biasing force exerted by the biasing means (46) to bias the carrying tool (41) is from 0.8 to 1.2 N.

5. A conveyed-pallet retaining method for the pallet conveying device (10) according to any of the previous claims, comprising:
a step of mounting a pallet (21) on a pallet rail (16); a step of engaging protrusions (26b) and recesses (26a) formed on the pallet (21) with protrusions (27b) and recesses (27a) of an endless belt (27) extending along the pallet rail (16); a step of conveying the pallet (21) by circulating the endless belt (27); and a step of retaining the pallet (21) by stopping circulation of the endless belt (27), wherein
when the pallet (21) is retained by stopping the circulation of the endless belt (27), the protrusions (27b) and recesses (27a) of the endless belt (27) are pressed against the protrusions (26b) and recesses (26a) of the pallet (21).

6. The conveyed-pallet retaining method according to claim 5, wherein
the protrusions (27b) and recesses (27a) of the endless belt (27) are pressed against the protrusions (26b) and recesses (26a) of the pallet (21) by a carrying tool (41), the carrying tool (41) being provided at a retaining position of the pallet (21), and the carrying tool (41) being configured to carry the endless belt (27) in a movable manner.

## Patentansprüche

1. Eine Palettentransportvorrichtung (10) umfassend:
eine Palettenschiene (16), die konfiguriert ist, eine Palette (21) in einer Längsrichtung beweglich aufzunehmen
ein Endlosband (27), das entlang der Palettenschiene (16) so angeordnet ist, dass es umlaufen kann, wobei das Endlosband (27) mit Vorsprüngen (27b) und Vertiefungen (27a) versehen ist, die sich in einer Breitenrichtung erstrecken, und die Vorsprünge (27b) und Vertiefungen (27a) abwechselnd in der Längsrichtung in einer aufeinanderfolgenden Weise angeordnet sind; und
eine Vielzahl von Bandhaltevorrichtungen (40), die an der Palettenschiene (16) angeordnet sind, wobei jede der Bandhaltevorrichtungen (40) konfiguriert ist, das Endlosband (27) so zu halten, dass die Vorsprünge (27b) und Vertiefungen (27a) des Endlosbandes (27) mit Verankerungselementen (26) der Palette (21) in Eingriff kommen, die mit Vorsprüngen (26b) und Vertiefungen (26a) in einem Zustand ausgebildet sind, in dem die Palette (21) an der Palettenschiene (16) angebracht ist, **dadurch gekennzeichnet, dass**
jede der Bandhaltevorrichtungen (40) umfasst:
Tragwerkzeuge (41), auf denen das Oberbereichsseitenband (27c) des Endlosbandes (27), das mit den Verankerungselementen (26) in Eingriff steht, in Längsrichtung beweglich getragen wird; und
Spiralfedern (46), die jeweils als Vorspannmittel dienen, die die Tragwerkzeuge (41) so vorspannen, dass die an den Tragwerkzeugen (41) getragenen Vorsprünge (27b) und Vertiefungen (27a) des Oberbereichsseitenbandes (27c) gegen die Vorsprünge (26b) und Vertiefungen (26a) der Verankerungselemente (26) gedrückt werden, und
die Tragwerkzeuge (41) sich unter dem Oberbereichsseitenband (27c) befinden und jeweils umfassen:
eine Bodenplatte (42), die sich in Längsrichtung des Oberbereichsseitenbandes (27c) erstreckt;
ein Paar von Seitenwänden (43, 43), die auf beiden Seiten der Bodenplatte (42) angeordnet sind, so dass sie aufrecht stehen und das Oberbereichsseitenband (27c) von beiden Seiten in der Breitenrichtung umschließen; und
eine Vielzahl von Rollen (44), die zwischen dem Paar von Seitenwänden (43, 43) angeordnet sind.

2. Die Palettentransportvorrichtung (10) gemäß Anspruch 1, wobei
eine Länge des Tragwerkzeugs (41) in der Längsrichtung der Palettenschiene (16) gleich oder kleiner als eine Länge der Palette (21) ist, und
die Vielzahl der Tragwerkzeuge (41) in der Längsrichtung der Palettenschiene (16) durchgehend angeordnet sind.

3. Die Palettentransportvorrichtung (10) gemäß Anspruch 1 oder 2, wobei
ein Bewegungsbereich des Tragwerkzeugs (41) durch das Vorspannmittel (46) kleiner ist als eine Höhe der Vorsprünge (27b) und Vertiefungen (27a) des Endlosbandes (27).

4. Die Palettentransportvorrichtung (10) gemäß einem der Ansprüche 1 bis 3, wobei
eine Vorspannkraft, die durch das Vorspannmittel (46) ausgeübt wird, um das Tragwerkzeug (41) vorzuspannen, zwischen 0,8 und 1,2 N beträgt.

5. Ein Verfahren zum Zurückhalten von geförderten Paletten für die Palettenfördervorrichtung (10) gemäß einem der vorhergehenden Ansprüche, umfassend:
einen Schritt des Anbringens einer Palette (21) auf einer Palettenschiene (16); einen Schritt des In-Eingriff-Bringens von Vorsprüngen (26b) und Vertiefungen (26a), die auf der Palette (21) ausgebildet sind, mit Vorsprüngen (27b) und Vertiefungen (27a) eines Endlosbandes (27), das sich entlang der Palettenschiene (16) erstreckt; einen Schritt des Transportierens der Palette (21) durch Umlaufenlassen des Endlosbandes (27); und einen Schritt des Festhaltens der Palette (21) durch Anhalten des Umlaufs des Endlosbandes (27), wobei
wenn die Palette (21) durch Anhalten des Umlaufs des Endlosbandes (27) zurückgehalten wird, die Vorsprünge (27b) und Vertiefungen (27a) des Endlosbandes (27) gegen die Vorsprünge (26b) und Vertiefungen (26a) der Palette (21) gedrückt werden.

6. Das Verfahren zum Zurückhalten von geförderten Paletten gemäß Anspruch 5, wobei
die Vorsprünge (27b) und Vertiefungen (27a) des Endlosbandes (27) durch ein Tragwerkzeug (41) gegen die Vorsprünge (26b) und Vertiefungen (26a) der Palette (21) gepresst werden, wobei das Tragwerkzeug (41) an einer Halteposition der Palette (21) angeordnet ist und das Tragwerkzeug (41) konfiguriert ist, um das Endlosband (27) beweglich zu tragen.

## Revendications

1. Dispositif de convoyage de palettes (10) comprenant :
un rail de palettes (16) configuré pour monter une palette (21) de manière mobile dans une direction longitudinale ;
une courroie sans fin (27) pourvue le long du rail de palettes (16) de manière à pouvoir être mise en circulation, la courroie sans fin (27) étant pourvue de protubérances (27b) et de renfoncements (27a) s'étendant en direction de la largeur, et les protubérances (27b) et les renfoncements (27a) étant pourvus alternativement en direction longitudinale de manière consécutive ; et
une pluralité de dispositifs de support de courroie (40) pourvus sur le rail de palettes (16), chacun des dispositifs de support de courroie (40) étant configuré pour supporter la courroie sans fin (27) de telle sorte que les protubérances (27b) et les renfoncements (27a) de la courroie sans fin (27) s'engagent avec des éléments d'ancrage (26) de la palette (21) formés avec des protubérances (26b) et des renfoncements (26a) dans un état où la palette (21) est montée sur le rail de palettes (16),
**caractérisé en ce que**
chacun des dispositifs de support de courroie (40) comporte :
des outils de transport (41) sur lesquels la courroie latérale de région supérieure (27c) de la courroie sans fin (27) engagée avec les éléments d'ancrage (26) est portée de manière à être mobile dans la direction longitudinale ; et
des ressorts hélicoïdaux (46), chacun servant de moyen de contrainte qui contraint les outils de transport (41) de telle sorte que les protubérances (27b) et les renfoncements (27a) de la courroie latérale de région supérieure (27c) portée par les outils de transport (41) sont pressés contre les protubérances (26b) et les renfoncements (26a) des éléments d'ancrage (26), et
les outils de transport (41) sont situés sous la courroie latérale de région supérieure (27c), et chacun comporte :
une plaque de fond (42) qui s'étend dans la direction longitudinale de la courroie latérale de région supérieure (27c) ;
une paire de parois latérales (43, 43) qui sont pourvues des deux côtés de la plaque de fond (42) de manière à être dressées verticalement et de manière à intercaler entre elles la courroie latérale de région supérieure (27c) des deux côtés en direction de la largeur ; et
une pluralité de rouleaux (44) qui sont pourvus entre la paire de parois latérales (43, 43).

2. Dispositif de convoyage de palettes (10) selon la revendication 1, dans lequel
la longueur de l'outil de transport (41) dans la direction longitudinale du rail de palettes (16) est inférieure ou égale à la longueur de la palette (21), et
les outils de ladite pluralité d'outils de transport (41) sont pourvus de manière continue dans la direction longitudinale du rail de palettes (16).

3. Dispositif de convoyage de palettes (10) selon la revendication 1 ou 2, dans lequel
la plage mobile de l'outil de transport (41) par le moyen de contrainte (46) est inférieure à la hauteur des protubérances (27b) et des renfoncements (27a) de la courroie sans fin (27).

4. Dispositif de convoyage de palettes (10) selon l'une quelconque des revendications 1 à 3, dans lequel
la force de contrainte exercée par le moyen de contrainte (46) pour contraindre l'outil de transport (41) est comprise entre 0,8 N et 1,2 N.

5. Procédé de retenue d'une palette convoyée pour le dispositif de convoyage de palettes (10) selon l'une quelconque des revendications précédentes, comprenant :
une étape de montage d'une palette (21) sur un rail de palettes (16) ; une étape d'engagement de protubérances (26b) et de renfoncements (26a) formés sur la palette (21) avec des protubérances (27b) et des renfoncements (27a) d'une courroie sans fin (27) s'étendant le long du rail de palettes (16) ; une étape de convoyage de la palette (21) par circulation de la courroie sans fin (27) ; et une étape de retenue de la palette (21) en arrêtant la circulation de la courroie sans fin (27),
dans lequel, quand la palette (21) est retenue par l'arrêt de la circulation de la courroie sans fin (27), les protubérances (27b) et les renfoncements (27a) de la courroie sans fin (27) sont pressés contre les protubérances (26b) et les renfoncements (26a) de la palette (21).

6. Procédé de retenue de palette convoyée selon la revendication 5, dans lequel
les protubérances (27b) et les renfoncements (27a) de la courroie sans fin (27) sont pressés contre les protubérances (26b) et les renfoncements (26a) de la palette (21) par un outil de transport (41), l'outil de transport (41) étant pourvu à une position de retenue de la palette (21), et l'outil de transport (41) étant configuré pour transporter la courroie sans fin (27) de manière mobile.
